(19) **Europäisches Patentamt / European Patent Office / Office européen des brevets**

(11) **EP 2 341 109 B1**

(12) **EUROPEAN PATENT SPECIFICATION**

(45) Date of publication and mention
of the grant of the patent:
**29.11.2017 Bulletin 2017/48**

(51) Int Cl.:
***C09D 11/00*** *(2014.01)*     ***B41J 2/01*** *(2006.01)*
***B41M 5/00*** *(2006.01)*

(21) Application number: **09811578.5**

(22) Date of filing: **04.09.2009**

(86) International application number:
**PCT/JP2009/065512**

(87) International publication number:
**WO 2010/027053 (11.03.2010 Gazette 2010/10)**

(54) **INK COMPOSITION**

TINTENZUSAMMENSETZUNG

COMPOSITION D'ENCRE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **05.09.2008 JP 2008228848
26.11.2008 JP 2008301093**

(43) Date of publication of application:
**06.07.2011 Bulletin 2011/27**

(73) Proprietor: **Toyo Ink Mfg. Co., Ltd
Tokyo 104-0031 (JP)**

(72) Inventors:
• **YODA, Atsushi
Tokyo 104-0031 (JP)**
• **AIDA, Seiji
Tokyo 104-0031 (JP)**

• **YAMASAKI, Ken
Tokyo 104-0031 (JP)**
• **FUJIWARA, Daisuke
Tokyo 104-0031 (JP)**
• **YAMADA, Kouhei
Tokyo 104-0031 (JP)**
• **SHIGEMORI, Kazunori
Tokyo 104-0031 (JP)**
• **UMEZAWA, Mitsuo
Tokyo 104-0031 (JP)**

(74) Representative: **Schwabe - Sandmair - Marx
Patentanwälte Rechtsanwalt
Partnerschaft mbB
Joseph-Wild-Straße 20
81829 München (DE)**

(56) References cited:
**JP-A- 2003 292 838    JP-A- 2004 115 708
JP-A- 2004 263 035    JP-T- 2008 519 868**

Printed by Jouve, 75001 PARIS (FR)

**Description**

TECHNICAL FIELD

The present invention relates to a pigment ink composition that can fulfill excellent print stability, and performances and drying performance of printed matters.

BACKGROUND ART

Conventionally, as the printing methods suitable for non-absorbent substrates, there are generally known gravure printing for soft packaging materials, flexographic printing for sanitary materials, silk screen printing for metal plates, inkjet printing for indoor and outdoor advertisements, and the like.

Among them, for the inkjet printing, which prints images or characters by tiny ink droplets discharged from a nozzle of an inkjet head, an inkjet printer that can deal with A-0 size, was developed in recent years. Under the background that use environment for outdoor use such as outdoor poster increases, inks for the inkjet printing that are excellent in water resistance, weather resistance and rubbing resistance, have been actively developed.

Particularly, as an ink for the inkjet printing used in the business field of neon sign, a solvent inkjet ink in which an organic solvent is used as a solvent, is mainly used instead of an aqueous inkjet ink in which a colorant such as a water-soluble dye is added generally to water. For example, for printing on a surface of a polyvinyl chloride sheet or the like that is used as a medium of an outdoor advertisement or the like, considered to be preferred is a pigment ink composition, which includes a pigment that is excellent in weather resistance, a binder resin that brings the pigment solidly into intimate adhesion to the sheet surface, and an organic solvent that can dissolve the binder resin.

Among them, in selecting the binder resin, generally one kind is selected from various kinds of resins so as to fulfill stable discharge from an inkjet head, and sufficient resistance and drying performance of printed matters (Patent Documents 1 to 3). However, if a resin is selected so as to improve discharge stability from an inkjet head, coating film resistance or drying performance becomes poor, and if a resin is selected so as to improve coating film resistance or drying performance, discharge stability becomes poor. Therefore, it was difficult to develop an inkjet ink that improves all of the performances.

PRIOR ART DOCUMENT

PATENT DOCUMENTS

Patent Document 1: Japanese Patent Application Laid-Open (JP-A) No. 2007-284642
Patent Document 2: JP-A No. 2006-56990
Patent Document 3: JP-A No. 2007-169492

The document WO 2006/052,973 relates to an ink jet ink composition comprising an aqueous medium and microgel particles, said particles comprising a crosslinked copolymer prepared from a monomer mixture comprising at least a crosslinking monomer, a polymerizable carboxylic acid monomer, and one or more polymerizable water insoluble vinyl type monomers. The ink composition may be a colorless ink or it may contain a colorant.

DISCLOSURE OF THE INVENTION

PROBLEMS TO BE SOLVED BY THE INVENTION

The present invention has been made in view of the problems described above, and an object of the present invention is to provide a pigment ink composition, particularly an inkjet ink composition that can fulfill excellent print stability, and resistance and drying performance of printed matters.

MEANS FOR SOLVING THE PROBLEMS

The aforementioned object of the present invention is accomplished by the constitutions described below.
The present invention relates to an ink composition comprising:

at least a pigment;

an organic solvent; and

two or more kinds of binder resins having different weight average molecular weights (Mw), wherein the binder resins are selected from the group consisting of acrylic resins, styrene-acrylic resins and vinyl chloride resins wherein, among the two or more kinds of binder resins, a binder resin having lowest weight average molecular weight (Mw), which is marked as $\alpha$, meets the formula (2), a binder resin having higher weight average molecular weight (Mw) than that of the binder resin $\alpha$, which is marked as $\beta$, meets the formula (3), and the binder resins $\alpha$ and $\beta$ meet formulae (1) to (3):

$$\text{Formula (1): } Mw\beta - Mw\alpha \geq 10,000,$$

$$\text{Formula (2): } 1,000 < Mw\alpha < 30,000,$$

and

$$\text{Formula (3): } 20,000 < Mw\beta < 100,000,$$

wherein $Mw\alpha$ represents the weight average molecular weight of the binder resin $\alpha$, and $Mw\beta$ represents the weight average molecular weight of the binder resin $\beta$; and

wherein each of the binder resins $\alpha$ and $\beta$ meets the formula (4):

$$\text{Formula (4): } 1 < Mw/Mn < 3,$$

wherein Mw represents $Mw\alpha$ or $Mw\beta$, and Mn represents a number average molecular weight of each of the binder resins $\alpha$ and $\beta$,

said weight average molecular weights and number average molecular weights being polystyrene-conversion molecular weights measured with GPC using THF as the eluent. >>

Furthermore, the present invention relates to an ink composition, which is characterized that the two or more kinds of binder resins to be contained are a vinyl chloride resin and/or an acrylic resin.

Furthermore, the present invention relates to an ink composition, which is characterized that the ink composition includes any one or more solvents represented by formulae (5) to (8) as the organic solvent:

Formula (5): $R_1CO(OR_2)_ZOR_3$,

Formula (6): $R_4CO(OR_5)_ZOCOR_6$,

Formula (7): $R_7(OR_8)_ZOR_9$, and

Formula (8): $R_{10}COOR_{11}$

(wherein $R_2$, $R_5$ and $R_8$ represent, independently from each other, an ethylene group or a propylene group, $R_1$, $R_3$, $R_4$ and $R_6$ represent, independently from each other, a $C_{1-4}$ alkyl group, $R_7$ and $R_9$ represent, independently from each other, a hydrogen atom or a $C_{1-4}$ alkyl group, $R_{10}$ represents a 2-hydroxyethyl group, $R_{11}$ represents a $C_{1-8}$ alkyl group and Z represents an integer of 1 to 3.).

Furthermore, the present invention relates to an ink composition according to any one of claims 1 to 4, which is characterized that at least one or more kinds among the two or more kinds of binder resins to be contained are an acrylic resin, and are synthesized in an organic solvent having a boiling point of 60°C to 150°C, and then substituted in a stripping method to at least one (poly)alkylene glycol derivative having a boiling point of 150°C or more, and used.

Furthermore, the present invention relates to an ink composition, which is characterized that a nitrogen-containing, sulfur-containing, or lactone-based solvent is contained as a portion of the organic solvent.

Furthermore, the present invention relates to an ink composition, which is characterized by containing a dispersant in the ink composition.

Furthermore, the present invention relates to an ink composition, which is characterized that the ink composition is an inkjet ink.

The disclosure of the present specification relates to a subject enclosed in Japanese Patent Application Nos. 2008-228848 (filed on September 5, 2008) and 2008-301093 (filed on November 26, 2008), which are incorporated entirely into the present specification by reference.

EFFECTS OF THE INVENTION

According to the present invention, there is provided a pigment ink composition, particularly an inkjet ink composition that can fulfill excellent print stability, and performances and drying performance of printed matters, by means of using two or more kinds of binder resins having different weight average molecular weights (Mw) in an ink.

BEST MODE FOR CARRYING OUT THE INVENTION

Hereinafter, the best mode for carrying out the present invention will be explained.

The ink composition of the present invention is a pigment ink composition, which includes a pigment that is excellent in weather resistance, a binder resin that brings the pigment solidly into intimate contact with a print medium surface, and an organic solvent that can dissolve the binder resin. Examples of the binder resin that is excellent in adhesiveness to the print medium surface include, for example, acrylic resins, styrene-acrylic resins, styrene-maleic acid-based resins, rhodine-based resins, rhodine ester-based resins, ethylene-vinyl acetate-based resins, petroleum resins, coumarone-indene-based resins, terpene phenol-based resins, phenol resins, urethane resins, melamine resins, urea resins, epoxy-based resins, cellulose-based resins, xylene resins, alkyd resins, aliphatic hydrocarbon resins, butyral resins, maleic acid resins, fumaric acid resins, vinyl chloride resins and the like. Specific examples of the resin include BR-50, BR-52, MB-2539, BR-60, BR-64, BR-73, BR-75, MB-2389, BR-80, BR-83, BR-87, BR-105, BR-106, BR-107, BR-110, BR-113, MB-2660, MB-2952, MB-3015, MB-7033, BR-115, MB-2478 and BR-116, which are manufactured by Mitsubishi Rayon Co., Ltd., A-12, A-21, B-38, B-60, B-65, B-66, B-67, B-99N and DM-55, which are manufactured by WILBUR-ELLIS CO., (JAPAN) LTD., UCAR Solution vinyl resins VYHD, VYHH, VMCA, VROH and VYLF-X, which are manufactured by The Dow Chemical Company, SOLBIN resins CL, CNL, C5R, TA3 and TA5R, which are manufactured by Nissin Chemical Industry CO., Ltd., vinyl resins E15/45, H14/36, H40/43, E15/45M and E15/40M, which are manufactured by Wacker-Chemie GmbH, SUPER ESTER 75, ESTER GUM HP and MALKYD 33, which are manufactured by Arakawa Chemical Industries, Ltd., YS POLYSTAR T80 manufactured by Yasuhara Co., Ltd., Hiretts HRT200X manufactured by Mitsui Chemicals, Inc., JONCRYL 586 manufactured by Johnson Polymer Co., Ltd., and SMA2625P manufactured by Sartomer Company Inc. The resin is preferably contained by 0.1 to 20 weight% in the ink. If the addition amount is 0.1 weight% or less in the ink, adhesiveness to the print medium surface is poor, and the resistance of a coating film decreases. If the addition amount is 20 weight% or more, ink viscosity is too high, and thus print qualifications decrease, which is undesirable. From a point of printed matter resistance, the resin is preferably an acrylic resin, a styrene-acrylic resin or a vinyl chloride resin, and from a point of drying performance, the resin is more preferably an acrylic resin or a styrene-acrylic resin.

However, if the resin used as the binder resin has high weight average molecular weight (Mw), resistance and drying performance of printed matters are good, but ink discharge stability from an inkjet head, which is a most important performance as an inkjet ink, becomes poor. In addition, if the weight average molecular weight (Mw) of the binder resin is low, discharge stability is good, but resistance and drying performance of printed matters become poor. Therefore, it was difficult to develop an inkjet ink that improves all of these three performances.

Consequently, the present inventors have conducted various studies, and as results, found that it is possible to prepare a pigment ink composition for inkjet recording that can fulfill excellent print stability, and performances and drying performance of printed matters, by means of using two or more kinds of binder resins having different weight average molecular weights (Mw), and thus accomplished the present invention.

In the present invention, in order to prepare a pigment ink composition for inkjet recording that can fulfill excellent print stability, and resistance and drying performance of printed matters, used are two or more kinds of binder resins having different weight average molecular weights (Mw). The two or more kinds of binder resins to be used preferably comprise one or more kinds of a binder resin $\alpha$ having lowest weight average molecular weight (Mw), and a binder resin $\beta$ having higher weight average molecular weight (Mw) than Mw$\alpha$. This is intended to improve all of these three performances by combination of a binder resin ($\alpha$) having low weight average molecular weight, which is excellent in ink discharge stability, and a binder resin ($\beta$) having high weight average molecular weight, which is excellent in performances and drying performance of printed matters.

Herein, when the weight average molecular weight of the binder resin $\alpha$ is marked as Mw$\alpha$, and the weight average molecular weight of the binder resin $\beta$ is marked as Mw$\beta$, the relationship between the weight average molecular weights (Mw) of the two or more kinds of binder resins to be used in the present invention is preferably Mw$\beta$ - Mw$\alpha \geq$ 10,000, more preferably Mw$\beta$ - Mw$\alpha \geq$ 15, 000, and further particularly preferably Mw$\beta$ - Mw$\alpha \geq$ 20,000. The relationship between the weight average molecular weights (Mw) of the two or more kinds of binder resins to be used is in a region of Mwβ - Mwα ≥ 20,000, it is possible to prepare an ink that is good in all of discharge stability, and performances and drying performance of printed matters. If the relationship between the weight average molecular weights (Mw) of the two or more kinds of binder resins to be used is in a region of Mwβ - Mwα < 10,000, it becomes difficult to improve all of these three performances.

In addition, the relationship between weight average molecular weights (Mw) of the two or more kinds of binder resins is preferably in a region of 1,000 < Mwα < 30,000 and 20,000 < Mwβ < 100,000, and further particularly preferably in a region of 5,000 < Mwα < 30,000 and 20,000 < Mwβ < 50,000. If Mwα < 1,000, when the ink composition becomes a printed matter, the coating film is brittle and breaking occurs. If Mwα > 30, 000, discharge stability becomes poor. In addition, if Mwβ < 20,000, excellent performances and drying performance of printed matters cannot be fulfilled. If Mwβ > 100,000, discharge from an inkjet head is impossible.

In addition, the relationship between the weight average molecular weight (Mw) and the number average molecular weight (Mn) of the two or more kinds of the binder resins is preferably in a region of 1 < Mw/Mn < 3, more preferably in a region of 1 < Mw/Mn < 2.5, and further particularly preferably in a region of 1 < Mw/Mn < 2.3. When the relationship between the weight average molecular weight (Mw) and the number average molecular weight (Mn) of the two or more kinds of the binder resins is in a region of 1 < Mw/Mn < 2.3, the binder resins are easily dissolved in the solvent, and ink discharge stability from an inkjet head can be improved. When the relationship between the weight average molecular weight (Mw) and the number average molecular weight (Mn) of the two or more kinds of the binder resins is in a region of Mw/Mn > 3, the binder resins are hardly dissolved in the solvent, and ink discharge stability becomes poor.

In addition, as the two or more kinds of binder resins to be contained, a vinyl chloride resin and/or an acrylic resin may be used. By means of combination of a vinyl chloride resin, which is excellent in gloss of printed matter and stretching property of a coating film, and an acrylic resin, which is excellent in drying performance of printed matter, it is possible to obtain excellent printed matter without offset (blocking) even with an inkjet printer having fast print speed.

A main solvent that is used in the present invention preferably has a boiling point of 150°C or more. If the boiling point is too low, when the solvent is used in an inkjet ink, drying on a nozzle is fast, which is a cause of clogging. Furthermore, the solvent preferably has a burning point of 61°C or more. If the burning point is less than 61°C, the solvent is classified as a high flammable liquid in dangerous goods of ship transport in the international transport-related law, and is restricted in convey and transport. The burning point is further preferably 70°C or more. If the burning point is 70°C or more, the solvent is classified as Type IV dangerous goods and Type III petroleum under Fire Service Act, and less restricted in manufacture, convey, transport and storage.

Such a solvent includes solvents represented by formulae (5) to (8) described below:

Formula (5): $R_1CO(OR_2)_ZOR_3$,

Formula (6): $R_4CO(OR_5)_ZOCOR_6$,

Formula (7): $R_7(OR_8)_ZOR_9$, and

Formula (8) : $R_{10}COOR_{11}$

(wherein $R_2$, $R_5$ and $R_8$ represent, independently from each other, an ethylene group or a propylene group, $R_1$, $R_3$, $R_4$ and $R_6$ represent, independently from each other, a $C_{1-4}$ alkyl group, $R_7$ and $R_9$ represent, independently from each other, a hydrogen atom or a $C_{1-4}$ alkyl group, $R_{10}$ represents a 2-hydroxyethyl group, $R_{11}$ represents a $C_{1-8}$ alkyl group and Z represents an integer of 1 to 4.)

Examples of the solvent corresponding to the formula (5) include glycol monoacetates such as ethylene glycol monomethyl ether acetate, ethylene glycol monoethyl ether acetate, ethylene glycol monobutyl ether acetate, diethylene glycol monomethyl ether acetate, diethylene glycol monoethyl ether acetate, diethylene glycol monobutyl ether acetate, propylene glycol monomethyl ether acetate, dipropylene glycol monomethyl ether acetate, ethylene glycol monomethyl ether propionate, ethylene glycol monoethyl ether propionate, ethylene glycol monobutyl ether propionate, diethylene glycol monomethyl ether propionate, diethylene glycol monoethyl ether propionate, diethylene glycol monobutyl ether propionate, propylene glycol monomethyl ether propionate, dipropylene glycol monomethyl ether propionate, ethylene glycol monomethyl ether butylate, ethylene glycol monoethyl ether butylate, ethylene glycol monobutyl ether butylate, diethylene glycol monomethyl ether butylate, diethylene glycol monoethyl ether butylate, diethylene glycol monobutyl ether butylate, propylene glycol monomethyl ether butylate and dipropylene glycol monomethyl ether butylate.

Examples of the solvent corresponding to the formula (6) include glycol diacetates such as ethylene glycol diacetate, diethylene glycol diacetate, propylene glycol diacetate, dipropylene glycol diacetate, ethylene glycol acetate propionate, ethylene glycol acetate butylate, ethylene glycol propionate butylate, ethylene glycol dipropionate, ethylene glycol dibutylate, diethylene glycol acetate propionate, diethylene glycol butylate, diethylene glycol propionate butylate, diethylene glycol dipropionate, diethylene glycol dibutylate, propylene glycol acetate propionate, propylene glycol acetate butylate, propylene glycol propionate butylate, propylene glycol dipropionate, propylene glycol dibutylate, dipropylene glycol acetate propionate, dipropylene glycol acetate butylate, dipropylene glycol propionate butylate, dipropylene glycol dipropionate and dipropylene glycol dibutylate.

Examples of the solvent corresponding to the formula (7) include glycols such as ethylene glycol, diethylene glycol, triethylene glycol, propylene glycol, dipropylene glycol, and glycol ethers such as ethylene glycol monobutyl ether, propylene glycol monomethyl ether, propylene glycol monobutyl ether, diethylene glycol monoethyl ether, diethylene glycol diethyl ether, diethylene glycol monobutyl ether, diethylene glycol dibutyl ether, diethylene glycol methylethyl ether, dipropylene glycol monomethyl ether, dipropylene glycol monoethyl ether, dipropylene glycol monobutyl ether, propylene glycol n-propyl ether, triethylene glycol monomethyl ether, triethylene glycol monoethyl ether, triethylene glycol monobutyl ether, tripropylene glycol monomethyl ether, tetraethylene glycol dimethyl ether and tetraethylene glycol diethyl ether.

Examples of the solvent corresponding to the formula (8) include esters such as methyl lactate, ethyl lactate, propyl lactate and butyl lactate.

Among them, from a viewpoint of resin solubility and drying performance on a nozzle, the solvent is preferably a (poly)ethylene glycol diether-based solvent, or a (poly)ethylene glycol monoether monoester-based solvent. Specifically, examples of the preferable solvent include ethylene glycol monobutyl ether acetate and diethylene glycol diethyl ether. From a viewpoint of low odor, the solvent is more particularly preferably diethylene glycol diethyl ether.

In addition, in consideration of safety and health, the solvent is particularly preferably diethylene glycol diethyl ether from a viewpoint of harmful effects such as acute toxicity, mutagenicity, carcinogenicity and reproductive toxicity.

Among the two or more kinds of binder resins used in the present invention, at least one or more kinds are acrylic resins, this acrylic resin is preferably synthesized in an organic solvent having a boiling point of 60°C to 150°C, and then substituted to at least one (poly)alkylene glycol derivative having a boiling point of 150°C or more by a stripping method.

When an acrylic resin obtained by direct solution polymerization in a (poly)alkylene glycol derivative having a boiling point of 150°C or more, is used in the ink composition, gloss and concentration of printed matters tend to decrease. A reason therefor has not been elucidated, but inferred that the (poly) alkylene glycol derivative works as a chain transfer agent, a (poly) alkylene glycol derivative-derived structure is produced in a portion of the resin, and thus the reaction rate decreases, and the refraction index of the resin is not uniform. On the other hand, an acrylic resin obtained by the stripping method is preferably used as a raw material for the ink composition since it has high reaction rate, and helps avoid these problems.

Examples of the (poly)alkylene glycol derivative having a boiling point of 150°C or more include glycol ethers such as ethylene glycol monobutyl ether, propylene glycol monomethyl ether, propylene glycol monobutyl ether, diethylene glycol monoethyl ether, diethylene glycol diethyl ether, diethylene glycol monobutyl ether, diethylene glycol methylethyl ether, diethylene glycol dibutyl ether, dipropylene glycol monomethyl ether, dipropylene glycol monoethyl ether, dipropylene glycol monobutyl ether, propylene glycol n-propyl ether, triethylene glycol monomethyl ether, triethylene glycol monoethyl ether, triethylene glycol monobutyl ether, tripropylene glycol monomethyl ether, tetraethylene glycol dimethyl ether and tetraethylene glycol diethyl ether.

Furthermore, examples of the (poly)alkylene glycol derivative having a boiling point of 150°C or more include glycol monoacetates such as ethylene glycol monoethyl ether acetate, ethylene glycol monobutyl ether acetate, diethylene glycol monomethyl ether acetate, diethylene glycol monoethyl ether acetate, diethylene glycol monobutyl ether acetate, dipropylene glycol monomethyl ether acetate, ethylene glycol monomethyl ether propionate, ethylene glycol monoethyl ether propionate, ethylene glycol monobutyl ether propionate, diethylene glycol monomethyl ether propionate, diethylene glycol monoethyl ether propionate, diethylene glycol monobutyl ether propionate, propylene glycol monomethyl ether propionate, dipropylene glycol monomethyl ether propionate, ethylene glycol monomethyl ether butylate, ethylene glycol monoethyl ether butylate, ethylene glycol monobutyl ether butylate, diethylene glycol monomethyl ether butylate, diethylene glycol monoethyl ether butylate, diethylene glycol monobutyl ether butylate, propylene glycol monomethyl ether butylate and dipropylene glycol monomethyl ether butylate.

Examples of the (poly)alkylene glycol derivative having a boiling point of 150°C or more include glycol diacetates such as ethylene glycol diacetate, diethylene glycol diacetate, propylene glycol diacetate, dipropylene glycol diacetate, ethylene glycol acetate propionate, ethylene glycol acetate butylate, ethylene glycol propionate butylate, ethylene glycol dipropionate, ethylene glycol dibutylate, diethylene glycol acetate propionate, diethylene glycol butylate, diethylene glycol propionate butylate, diethylene glycol dipropionate, diethylene glycol dibutylate, propylene glycol acetate propionate, propylene glycol acetate butylate, propylene glycol propionate butylate, propylene glycol dipropionate, propylene glycol dibutylate, dipropylene glycol acetate propionate, dipropylene glycol acetate butylate, dipropylene glycol propionate butylate, dipropylene glycol dipropionate and dipropylene glycol dibutylate. These solvents may be used alone, or as mixed in two or more kinds. Among them, from a viewpoint of resin solubility and drying performance on a nozzle, the (poly) alkylene glycol derivative having a boiling point of 150°C or more is preferably a (poly)ethylene glycol diether-based solvent or a (poly)ethylene glycol monoether monoester-based solvent. Specifically, examples of preferable (poly)alkylene glycol derivative include ethylene glycol monobutyl ether acetate and diethylene glycol diethyl ether. From a viewpoint of low odor, the (poly) alkylene glycol derivative is more particularly preferably diethylene glycol diethyl ether.

Examples of the organic solvent having a boiling point of 60°C to 150°C include hydrocarbon-based solvents, ester-based solvents, ketone-based solvents, alcohol-based solvents, glycol-based solvent and the like, but the organic solvent having a boiling point of 60°C to 150°C is preferably a hydrocarbon-based solvent, an ester-based solvent or a ketone-based solvent so as not to work as a chain transfer agent during the polymerization as described above. In addition, with respect to the boiling point of the organic solvent, an organic solvent having 60°C to 150°C boiling point is preferably used from a point of polymerization temperature and easy stripping.

Examples of the hydrocarbon-based solvent include n-hexane (boiling point: 68.7°C), n-heptane (boiling point: 98.4°C), n-octane (boiling point: 125.6°C), isooctane (boiling point: 99.3°C), cyclohexane (boiling point: 80.7°C), methylcyclohexane (boiling point: 110.9°C), benzene (boiling point: 80.1°C), toluene (boiling point: 110.6°C), o-xylene (boiling point: 144.4°C), m-xylene (boiling point: 139.1°C), p-xylene (boiling point: 138.4°C), ethyl benzene (boiling point: 136.2°C) and the like.

Examples of the ester-based solvent include propyl formate (boiling point: 81.3°C), n-butyl formate (boiling point: 106.8°C), isobutyl formate (boiling point: 98°C), amyl formate (boiling point: 130.4°C), ethyl acetate (boiling point: 77.1°C), n-propyl acetate (boiling point: 101.6°C), isopropyl acetate (boiling point: 89.0°C), n-butyl acetate (boiling point: 126.5°C), isobutyl acetate (boiling point: 118.3°C), sec-butyl acetate (boiling point: 112.5°C), n-amyl acetate (boiling point: 147.6°C), isoamyl acetate (boiling point: 142.5°C), methylisoamyl acetate (boiling point: 146.3°C), sec-hexyl acetate (boiling point: 146.3°C), methyl propionate (boiling point: 79.7°C), ethyl propionate (boiling point: 99.1°C), n-butyl propionate (boiling point: 145.4°C), methyl butyrate (boiling point: 102.3°C), ethyl butyrate (boiling point: 121.3°C), methyl lactate (boiling point: 144.8°C) and the like.

Examples of the ketone-based solvent include methylethyl ketone (boiling point: 79.6°C), methyl-n-propyl ketone (boiling point: 103.3°C), methyl-n-butyl ketone (boiling point: 127. 5°C), methylisobutyl ketone (boiling point: 115.9°C), diethyl ketone (boiling point: 102.2°C), ethyl-n-butyl ketone (boiling point: 147.8°C), di-n-propyl ketone (boiling point: 143.7°C), mesityl oxide (boiling point: 129°C) and the like.

Among these organic solvents, the organic solvent is more preferably toluene, ethyl acetate or methylethyl ketone from a point of cost.

Furthermore, if a nitrogen-containing, sulfur-containing, or lactone-based solvent is added in addition to the organic solvent of the formulae (5) to (8) in the present invention, it is possible to improve fixing property for dissolving the print medium surface, weather resistance and the like. Examples of the nitrogen-containing, sulfur-containing, or lactone-based solvent include, for example, 3-methyloxazolidinone, 3-ethyloxazolidinone, dimethylsulfoxide, 1-methyl-2-pyrrolidone, γ-butyrolactone, ε-caprolactone and the like. The addition amount may be 1 to 20%, but is preferably 1 to 10%, and further preferably 3 to 9%. If these nitrogen-containing or lactone-based solvent is used in an excessive amount, it causes trouble from a viewpoint of erosion of a printer member, and thus is not preferable.

Examples of the print medium of the present invention include a polyvinyl chloride resin sheet, a polyolefin-based sheet, glass, a metal and the like, and the print medium is particularly preferably a polyvinyl chloride resin sheet.

Examples of the pigment used in the present invention include various pigments used in a print ink, a paint and the like. Examples of such pigment, which is indicated as the color index, include pigment black 7, pigment blues 15, 15:1, 15:3, 15:4, 15:6 and 60, pigment greens 7 and 36, pigment reds 9, 48, 49, 52, 53, 57, 97, 122, 149, 168, 177, 178, 179, 206, 207, 209, 242, 254 and 255, pigment violets 19, 23, 29, 30, 37, 40 and 50, pigment yellows 12, 13, 14, 17, 20, 24, 74, 83, 86, 93, 94, 95, 109, 110, 117, 120, 125, 128, 137, 138, 139, 147, 148, 150, 151, 154, 155, 166, 168, 180, 185 and 213, pigment oranges 36, 43, 51, 55, 59, 61, 71 and 74, and the like. In addition, with respect to the carbon black, any carbon black such as neutral, acidic and basic carbon black may be used. The pigment is desirably contained in 0.1 to 10 weight% in the ink.

In the present invention, a dispersant is preferably added for improving dispersibility of a pigment and preservation and stability of an ink. Examples of the dispersant include hydroxy group-containing carbonic acid esters, salts of long chain polyaminoamide and polymeric acid ester, salts of polymeric polycarbonic acid, salts of long chain polyaminoamide and polar acid ester, polymeric unsaturated acid esters, high-molecular copolymers, modified polyurethanes, modified polyacrylates, polyether ester type anion-based activators, naphthalene sulfonic acid formalin condensate salts, aromatic sulfonic acid formalin condensate salts, polyoxyethylene alkyl phosphoric acid esters, polyoxyethylene nonylphenyl ethers, stearyl amine acetates and the like. Since the pigment is stabilized in dispersion by interaction with the dispersant, the dispersant is preferably those including a basic group that is a pigment adsorption site, and further preferably a basic dispersant including at least one of primary amines or secondary amines. Among them, the dispersant is most preferably a polyester-based basic dispersant or an acrylic urethane urea-based basic dispersant from a viewpoint of solubility in a solvent, and preservation and stability of dispersion.

Specific examples of the basic dispersant include SOLSPERSE 11200, SOLSPERSE 13240, SOLSPERSE 16000, SOLSPERSE 18000, SOLSPERSE 20000, SOLSPERSE 26000, SOLSPERSE 28000, SOLSPERSE 31845, SOLSPERSE 32500, SOLSPERSE 32550, SOLSPERSE 32600, SOLSPERSE 33000, SOLSPERSE 34750, SOLSPERSE 35100, SOLSPERSE 35200, SOLSPERSE 37500, SOLSPERSE 38500, SOLSPERSE 39000, SOLSPERSE 53095, which are manufactured by The Lubrizol Corporation. Specific examples of the poly ester-based basic dispersant include SOLSPERSE 13940, 17000, 24000, 32000, which are manufactured by The Lubrizol Corporation, AJISUPER PB821, PB822, PB823, PB824, PB827, which are manufactured by Aj inomoto Fine-Techno Co., Inc. and the like. These dispersants may be used in accordance with the kinds of the pigment and the solvent. The dispersant is preferably contained in 0.1 to 10 weight% in the ink.

In the ink composition of the present invention, various additives such as a plasticizer, a surface regulator, an ultraviolet ray protective agent, a photo stabilizer, an antioxidant and an anti-hydrolysis agent may be used.

Examples of the printing type of the ink composition of the present invention include gravure printing, flexographic printing, silk screen printing, inkjet printing and the like, and the printing type is particularly preferably inkjet printing type.

The ink composition of the present invention is manufactured by first dispersing a pigment by a resin or a dispersant in single or mixed solvent with a paint shaker, a sand mill, a roll mill, a media-less disperser and the like, and diluting the obtained pigment dispersion body with the solvent of the present invention.

Examples

Hereinafter, the present invention will be explained specifically with Examples. However, the present invention is not particularly limited to Examples. "Parts" in Examples represents "parts by weight" In addition, the weight average molecular weight (Mw) and the number average molecular weight (Mn) are polystyrene-conversion molecular weights measured with GPC (HLC-8220 GPC manufactured by TOSOH CORPORATION) using TSK gelsuper HZM-N column (manufactured by TOSOH CORPORATION) twice continuously at a flow rate of 0.35 ml/min using THF as a developing solvent.

[Manufacture Example 1]

(Manufacture of Vinyl polymer: A-1)

To a reaction vessel equipped with a gas introduction tube, a thermometer, a condenser and a stirrer, 500 parts of methyl methacrylate, 18.5 parts of thioglycerol, and 518.5 parts of toluene were added, and the reaction vessel was substituted with nitrogen gas. The inside of the reaction vessel was heated to 90°C, added with 0.50 part of AIBN, and then reacted for 7 hours, and then cooled and the solid content of the resin solution was measured. Next, 600 parts of diethylene glycol diethyl ether (DEDG) was added to the reaction vessel, and the reaction vessel was temperature-elevated to 80°C. When the temperature reached 80°C, the reaction vessel was mounted with a vacuum pump, and stripping was started at a depressurization degree of 60 torr, and the stripping was completed when the solid content reached 56.2%.

The reaction solution was added with diethylene glycol diethyl ether (DEDG) to adjust the solid content to 20%, to give the vinyl polymer (A-1) solution having two free hydroxyl groups in one end region. The weight average molecular weight (Mw) was 5,800, the number average molecular weight (Mn) was 3,700, and Mw/Mn was 1.57.

[Manufacture Example 2]

(Manufacture of Vinyl polymer: A-2)

To a reaction vessel equipped with a gas introduction tube, a thermometer, a condenser and a stirrer, 500 parts of methyl methacrylate, 3.2 parts of thioglycerol and 503.2 parts of toluene were added, and the reaction vessel was substituted with nitrogen gas. The inside of the reaction vessel was heated to 90°C, added with 0.50 part of AIBN, and then reacted for 7 hours, and then cooled and the solid content of the resin solution was measured. Next, 600 parts of diethylene glycol diethyl ether (DEDG) was added to the reaction vessel, and the reaction vessel was temperature-elevated to 80°C. When the temperature reached 80°C, the reaction vessel was mounted with a vacuum pump, and stripping was started at a depressurization degree of 60 torr, and the stripping was completed when the solid content reached 56.2%.

The reaction solution was added with diethylene glycol diethyl ether (DEDG) to adjust the solid content to 20%, to give the vinyl polymer (A-2) solution having two free hydroxyl groups in one end region. The weight average molecular weight (Mw) was 39,000, the number average molecular weight (Mn) was 19,000, and Mw/Mn was 2.17.

[Manufacture Example 3]

(Manufacture of Vinyl polymer: A-3)

To a reaction vessel was added 100 parts of toluene, and the vessel was heated to 110°C while being injected with nitrogen gas, and dropped with a mixture of 100 parts of methyl methacrylate and 6.0 parts of 2,2'-azobisisobutyronitrile (AIBN) over 2 hours at the same temperature to perform polymerization.

After completion of the dropping, the reaction mixture was further reacted at 110°C for 1 hour, and then added with 0.3 part of AIBN three times every hour, and further reacted at 110°C for 1 hour, and then cooled and the solid content of the resin solution was measured. Next, 200 parts of diethylene glycol diethyl ether (DEDG) was added to the reaction vessel, and the reaction vessel was temperature-elevated to 80°C. When the temperature reached 80°C, the reaction vessel was mounted with a vacuum pump, and stripping was started at a depressurization degree of 60 torr, and the stripping was completed when the solid content reached 56.2%.

The reaction solution was added with diethylene glycol diethyl ether (DEDG) to adjust the solid content to 20%, to give the vinyl polymer (A-3) solution. The weight average molecular weight (Mw) was 5, 400, the number average molecular weight (Mn) was 2,800, and Mw/Mn was 1.93.

[Manufacture Example 4]

(Manufacture of polycarbonate urethane resin: A-4)

To a four-neck flask equipped with a stirrer, a reflux cooling tube, a nitrogen introduction tube, a thermometer and a dropping funnel, 100.0 parts of Kuraray Polyol C-590 (bifuctional polycarbonate diol, manufactured by CURARAY CO., LTD), 38.7 parts of isophorone diisocyanate (trademark: IPDI, manufactured by Evonik Degussa Japan Co., Ltd.), 138.7 parts of diethylene glycol diethyl ether (DEDG), and 0.014 part of dibutyl tin dilaurate as a catalyst were added, and the reaction solution was slowly temperature-elevated to 100°C and the reaction was performed for 2 hours.

This reaction solution was the polycarbonate urethane resin (A-4), which was clear and colorless and had a solid content of 50%. The weight average molecular weight (Mw) was 62,300, the number average molecular weight (Mn) was 28,300, and Mw/Mn was 2.20.

[Manufacture Example 5]

(Manufacture of polyester urethane resin: A-5)

To a four-neck flask equipped with a stirrer, a reflux cooling tube, a nitrogen introduction tube, a thermometer and a dropping funnel, 100.0 parts of Kuraray Polyol P-510 (bifuctional polyester diol, manufactured by CURARAY CO., LTD), 38.7 parts of isophorone diisocyanate (trademark: IPDI, manufactured by Evonik Degussa Japan Co., Ltd.), 138.7 parts of diethylene glycol diethyl ether (DEDG), and 0.014 part of dibutyl tin dilaurate as a catalyst were added, and the reaction solution was slowly temperature-elevated to 100°C and the reaction was performed for 2 hours.

This reaction solution was the polyester urethane resin (A-5), which was clear and colorless and had a solid content of 50%. The weight average molecular weight (Mw) was 62,000, the number average molecular weight (Mn) was 27,700, and Mw/Mn was 2.24.

[Manufacture Example 6]

(Manufacture of polyether urethane resin: A-6)

To a four-neck flask equipped with a stirrer, a reflux cooling tube, a nitrogen introduction tube, a thermometer and a dropping funnel, 100.0 parts of PP-400 (bifuctional polyether diol, manufactured by Sanyo Chemical Industries, Ltd.), 48.3 parts of isophorone diisocyanate (trademark: IPDI, manufactured by Evonik Degussa Japan Co., Ltd.), 148.3 parts of diethylene glycol diethyl ether (DEDG), and 0.015 part of dibutyl tin dilaurate as a catalyst were added, and the reaction solution was slowly temperature-elevated to 100°C and the reaction was performed for 2 hours.

This reaction solution was the polyether urethane resin (A-6), which was clear and colorless and had a solid content of 50%. The weight average molecular weight (Mw) was 64,100, the number average molecular weight (Mn) was 29,200, and Mw/Mn was 2.24.

[Manufacture Example 7]

(Synthesis of Dispersant: B-1)

To a reaction vessel equipped with a gas introduction tube, a thermometer, a condenser and a stirrer, 1037 parts of the vinyl polymer (A-1) solution having a solid content of 50%, 76.0 parts of isophorone diisocyanate, 75.8 parts of diethylene glycol diethyl ether and 0.22 part of dibutyl tin dilaurate as a catalyst were added, and the reaction vessel was substituted with nitrogen gas. The inside of the reaction vessel was heated to 100°C, reacted for 3 hours, and then cooled to 40°C. The reaction solution was dropped to a mixture of 35.9 parts of methyliminobispropyl amine and 876.6 parts of diethylene glycol diethyl ether over 30 minutes, and further reacted for 1 hour, and then cooled to room temperature whereby to complete the reaction. The solid content was adjusted to 30%, to give a pale yellow transparent solution of the dispersant (B-1). The amine value of the dispersant (B-1) was 48.0 mg KOH/g.

(Measurement of molecular weight of marketed binder resins)

Marketed binder resins, which were used in Examples and Comparative examples as a binder resin, were measured for the weight average molecular weight (Mw) and the number average molecular weight (Mn), and Mw/Mn was computed. The weight average molecular weight (Mw) and the number average molecular weight (Mn) and Mw/Mn are described in Table 1.

[Table 1]

| | Resin 1 | Resin 2 | Resin 3 | Resin 4 | Resin 5 |
|---|---|---|---|---|---|
| Product name | JONCRYL586 (BASF Corporation.) | DIANAL BR- 87 (Mitsubishi Rayon Co., Ltd.) | VYHD (The Dow Chemical Company) | PARALO D A-21 (WILBUR-ELLIS CO., LTD.) | SOLB N CN (Nissin Chemical Industry Co., Ltd) |
| Kind of resin | Acrylic resin (Styrene/ Acrylic acid/ $\alpha$-methyl styrene) | Acrylic resin (Methyl methacrylate) | Vinyl chloride vinyl acetate copolymer resin | Acrylic resin (Methyl methacrylate) | Vinyl chloride vinyl acetate copolymer resin |
| Weight average molecuclar weight (M w) | 5400 | 27000 | 48000 | 94000 | 119000 |
| Number average molecular weight (Mn) | 3100 | 14000 | 22000 | 29000 | 41000 |
| Mw / Mn | 1.74 | 1.93 | 2.18 | 3.24 | 2.90 |

First, a pigment dispersion body A was prepared by blending as described below. This dispersion body was prepared by adding a pigment and a dispersant to an organic solvent and stirring the mixture with a high speed mixer and the like to homogenization, and then dispersing the obtained mill base about for 1 hour with a horizontal type sand mill.
- LIONOL BLUE FG-7400G (phthalocyanine pigment manufactured by TOYO INK MFG. CO., LTD.) 35.00 parts
- AJISUPER PB821 (pigment dispersant manufactured by Ajinomoto Fine-Techno Co., Inc.) 12.50 parts
- Ethylene glycol monobutyl ether acetate 52.50 parts

Furthermore, a pigment dispersion body B was prepared by blending as described below in a similar manner as in Manufacture Example 1.
- Fastogen Super Magenta RG (quinacridone pigment manufactured by DIC Corporation) 32.0 parts

- AJISUPER PB821 (pigment dispersant manufactured by Ajinomoto Fine-Techno Co., Inc.) 12.8 parts
- Diethylene glycol diethyl ether 55.2 parts

Furthermore, a pigment dispersion body C was prepared with a blend as described below in a similar manner as in Manufacture Example 1.

- YELLOW PIGMENT E4GN (nickel complex azopigment manufactured by LANXESS company) 30.00 parts
- SOLSPERSE 24000 GR (pigment dispersant manufactured by The Lubrizol Corporation) 16.50 parts
- Diethylene glycol ethylmethyl ether 53.50 parts

Furthermore, a pigment dispersion body D was prepared with a blend as described below in a similar manner as in Manufacture Example 1.

- ELFTEX 415 (carbon black manufactured by Cabot Corporation) 35.00 parts
- Dispersant: B-1 (DEDG varnish having 30% solid content) 46.67 parts
- Diethylene glycol diethyl ether 18.33 parts

The inks of Examples 1 to 14 and Comparative examples 1 to 12 were prepared with a blend as described in Table 2.

[Table 2]

| | | Example 1 | Example 2 | Example 3 | Example 4 | Example 5 | Example 6 | Example 7 |
|---|---|---|---|---|---|---|---|---|
| Pigment dispersant | A | 11.40 | 11.40 | 11.40 | | | | |
| | B | | | | 16.70 | 16.70 | 16.70 | 16.70 |
| | C | | | | | | | |
| | D | | | | | | | |
| Binder resin | Vinyl polymer A-1 | | | | | | Mwα 5.00 | |
| | Vinyl polymer A-2 | | | | | | | |
| | Vinyl polymer A-3 | | | | | | | Mwα 5.00 |
| | Polycarbonate urethane resin A-4 | | | | | | | |
| | Polyester urethane resin A-5 | | | | | | | |
| | Polyether urethane resin A-6 | | | | | | | |
| | Resin 1 | Mwα 1.50 | | | Mwα 1.67 | | | |
| | Resin 2 | | Mwα 1.33 | Mwα 1.33 | | Mwα 1.50 | Mwß 1 2.50 | Mwß 1 2.50 |
| | Resin 3 | Mwß 1 4.50 | Mwß 1 4.00 | Mwß 1 4.00 | Mwß 1 5.00 | Mwß 1 4.50 | Mwß 2 5.00 | Mwß 2 5.00 |
| | Resin 4 | | | | | | | |
| | Resin 5 | | | | | | | |
| Solvent | NMP | | | | | | | |
| | GBL | 8.00 | 8.00 | | | | | |
| | ε-CL | | | 5.00 | | | | |
| | MOZ | | | | 5.00 | 5.00 | 5.00 | 5.00 |
| | EOZ | | | | | | | |
| | DMSO | | | | | | | |
| | BGAc | 74.60 | 75.27 | 78.27 | | | | |
| | DEDG | | | | 61.63 | 62.30 | 60.80 | 60.80 |
| | MEDG | | | | | | | |
| | DMTeG | | | | 10.00 | 10.00 | 5.00 | 5.00 |

| | | Example 8 | Example 9 | Example 10 | Example 11 | Example 12 | Example 13 | Example 14 |
|---|---|---|---|---|---|---|---|---|
| Pigment dispersant | A | | | | | | | |
| | B | | | | | | | 16.70 |
| | C | 16.70 | | | | | | |
| | D | | 14.30 | 14.30 | 14.30 | 14.30 | 14.30 | |
| Binder resin | Vinyl polymer A-1 | | M wα 5.40 | | | | | |
| | Vinyl polymer A-2 | | | | | | M wβ 1 9.60 | |
| | Vinyl polymer A-3 | | | | | | | |
| | Polycarbonate urethane resin A-4 | | | M wβ 1 8.00 | | | | |
| | Polyester urethane resin A-5 | | | | M wβ 1 8.00 | | | |
| | Polyether urethane resin A-6 | | | | | M wβ 1 8.00 | | |
| | Resin 1 | M wα 1.50 | | | | | | |
| | Resin 2 | | M wβ 1 9.00 | M wα 1.20 | M wα 1.20 | M wα 1.20 | M wα 1.44 | M wα 1.50 |
| | Resin 3 | M wβ 1 4.50 | | | | | | M wβ 1 3.00 |
| | Resin 4 | | | | | | | M wβ 2 1.50 |
| | Resin 5 | | | | | | | |
| Solvent | NMP | 5.00 | | | | | | |
| | GBL | | | | | | | |
| | ε-CL | | | | | | | |
| | MQZ | | 5.00 | | | | 5.00 | 5.00 |
| | EQZ | | | 5.00 | | | | |
| | DMSO | | | | 5.00 | | | |
| | BGAc | | | | | | | |
| | DEDG | | 61.30 | 74.50 | 71.50 | 66.50 | 64.66 | 67.30 |
| | MEDG | 72.30 | | | | | | |
| | DM TeG | | 5.00 | 5.00 | | 10.00 | 5.00 | 5.00 |

| | | Comparative example 1 | Comparative example 2 | Comparative example 3 | Comparative example 4 | Comparative example 5 | Comparative example 6 |
|---|---|---|---|---|---|---|---|
| Pigment dispersant | A | 11.40 | 11.40 | | | | |
| | B | | | 16.70 | 16.70 | 16.70 | 16.70 |
| | C | | | | | | |
| | D | | | | | | |
| Binder resin | Vinyl polymer A - 1 | | | | | | |
| | Vinyl polymer A - 2 | | | | 9.50 | | |
| | Vinyl polymer A - 3 | | | | | | 46.00 |
| | Polycarbonate urethane resin A - 4 | | | | | | |
| | Polyester urethane resin A - 5 | | | | | | |
| | Polyether urethane resin A - 6 | | | | | | |
| | Resin 1 | 20.00 | | | | | |
| | Resin 2 | | | | | | |
| | Resin 3 | | 4.10 | 5.00 | | | |
| | Resin 4 | | | | | 5.00 | |
| | Resin 5 | | | | | | |
| Solvent | NMP | | | | | | |
| | GBL | 8.00 | | | | | |
| | ε - CL | | 5.00 | | | | |
| | MOZ | | | 5.00 | 5.00 | 5.00 | 5.00 |
| | EOZ | | | | | | |
| | DMSO | | | | | | |
| | BGAc | 60.60 | 79.50 | | | | |
| | DEDG | | | 63.30 | 63.80 | 68.30 | 27.30 |
| | MEDG | | | | | | |
| | DMTeG | | | 10.00 | 5.00 | 5.00 | 5.00 |

EP 2 341 109 B1

| | | Comparative example 7 | Comparative example 8 | Comparative example 9 | Comparative example 10 | Comparative example 11 | Comparative example 12 |
|---|---|---|---|---|---|---|---|
| Pigment dispersant | A | — | — | 11.40 | — | — | — |
| | B | — | — | — | 16.70 | 16.70 | — |
| | C | 16.70 | 14.30 | — | — | — | — |
| | D | — | — | — | — | — | 14.30 |
| Binder resin | Vinyl polymer A-1 | — | — | Mwα 1.23 | Mwα 3.00 | Mwα 1.07 | — |
| | Vinyl polymer A-2 | — | — | — | — | — | Mwα 20.00 |
| | Vinyl polymer A-3 | — | — | — | — | — | — |
| | Polycarbonate urethane resin A-4 | — | — | — | — | — | — |
| | Polyester urethane resin A-5 | — | — | — | — | — | — |
| | Polyether urethane resin A-6 | — | — | — | — | — | — |
| | Resin 1 | — | — | Mwβ 1 3.70 | Mwβ 1 1.50 | Mwβ 1 3.20 | Mwβ 1 10.00 |
| | Resin 2 | — | — | — | Mwβ 2 3.00 | — | — |
| | Resin 3 | 5.00 | — | — | — | — | — |
| | Resin 4 | — | — | — | — | — | — |
| | Resin 5 | — | 7.00 | — | — | — | — |
| Solvent | NMP | 5.00 | 5.00 | — | — | — | — |
| | GBL | — | — | 8.00 | — | — | — |
| | ε-CL | — | — | — | — | — | — |
| | MOZ | — | — | — | 5.00 | 5.00 | 5.00 |
| | EOZ | — | — | — | — | — | — |
| | DMSO | — | — | — | — | — | — |
| | BGAc | — | — | 83.67 | — | — | — |
| | DEDG | 73.30 | 68.70 | — | 65.80 | 64.03 | 45.70 |
| | MEDG | — | — | — | — | 10.00 | — |
| | DMTeG | — | 5.00 | — | 5.00 | — | 5.00 |

Abbreviations in Table 2

NMP:       N-methyl-2-pyrrolidone
GBL:       Gamma butyrolactone
ε-CL:      ε caprolactone
MOZ:       3-Methyl-2-oxazolidinone

EOZ: 3-Ethyl-2-oxazolidinone
DMSO: Dimethylsulfoxide
BGAc: Ethylene glycol monobutyl ether acetate
DEDG: Diethylene glycol diethyl ether
MEDG: Diethylene glycol methylethyl ether
DMTeG: Tetraethylene glycol dimethyl ether

[Table 3]

| | Test for print stability (Counted) | | Test for printed matter performances | | | Drying performance (second) | | |
|---|---|---|---|---|---|---|---|---|
| | | | Coating film resistance | | Gloss (at 60°) | Print rate 100% | Print rate 200% | Print rate 300% |
| | Middle temperature and middle humidity | Low temperature and low humidity | EtOH resistance | Rubbing resistance | | | | |
| Example 1 | 0 | 8 | 3 | 5 | 90 | 180 | 250 | 330 |
| Example 2 | 0 | 0 | 5 | 5 | 90 | 120 | 190 | 250 |
| Example 3 | 0 | 0 | 5 | 5 | 90 | 120 | 170 | 230 |
| Example 4 | 0 | 10 | 4 | 5 | 95 | 190 | 280 | 360 |
| Example 5 | 0 | 5 | 5 | 4 | 90 | 120 | 150 | 240 |
| Example 6 | 0 | 0 | 5 | 4 | 90 | 120 | 150 | 250 |
| Example 7 | 0 | 0 | 5 | 4 | 95 | 120 | 160 | 270 |
| Example 8 | 0 | 6 | 5 | 5 | 95 | 120 | 190 | 250 |
| Example 9 | 0 | 0 | 5 | 4 | 90 | 60 | 100 | 120 |
| Example 10 | 0 | 16 | 4 | 4 | 80 | 180 | 250 | 330 |
| Example 11 | 0 | 14 | 4 | 4 | 85 | 190 | 280 | 360 |
| Example 12 | 0 | 12 | 4 | 4 | 80 | 190 | 280 | 360 |
| Example 13 | 0 | 15 | 5 | 4 | 90 | 40 | 80 | 110 |
| Example 14 | 5 | 20 | 4 | 5 | 85 | 60 | 100 | 120 |
| Comparative Example 1 | 0 | 0 | 1 | 1 | 25 | 300 | 500 or more | 500 or more |
| Comparative Example 2 | 0 | 30 | 3 | 4 | 100 | 180 | 350 | 500 or more |
| Comparative Example 3 | 10 | 50 or more | 4 | 5 | 100 | 200 | 500 or more | 500 or more |
| Comparative Example 4 | 0 | 28 | 2 | 3 | 20 | 60 | 100 | 120 |
| Comparative Example 5 | 50 or more | 50 or more | 2 | 4 | 20 | 50 | 80 | 100 |
| Comparative Example 6 | 0 | 0 | 1 | 1 | 95 | 350 | 500 or more | 500 or more |
| Comparative Example 7 | 0 | 25 | 4 | 5 | 95 | 170 | 300 | 500 or more |
| Comparative Example 8 | 50 or more | 50 or more | 4 | 4 | 90 | 50 | 80 | 100 |

(continued)

| | Test for print stability (Counted) | | Test for printed matter performances | | | Drying performance (second) | | |
|---|---|---|---|---|---|---|---|---|
| | | | Coating film resistance | | Gloss (at 60°) | Print rate 100% | Print rate 200% | Print rate 300% |
| | Middle temperature and middle humidity | Low temperature and low humidity | EtOH resistance | Rubbing resistance | | | | |
| Comparative Example 9 | 50 or more | 50 or more | 4 | 5 | 85 | 80 | 140 | 200 |
| Comparative Example 10 | 50 or more | 50 or more | 4 | 5 | 85 | 80 | 140 | 200 |
| Comparative Example 11 | 50 or more | 50 or more | 4 | 5 | 85 | 80 | 140 | 200 |
| Comparative Example 12 | 0 | 0 | 1 | 1 | 50 | 300 | 500 or more | 500 or more |

As shown in Table 3 described below, the ink compositions of Examples 1 to 14, in which the binder resin in the ink was selected as specified in the present invention, were excellent in all of print stability, and performances and drying performance of printed matters. On the contrary to this, Comparative examples 1, 6 and 12, which had a combination of one or two kinds having low weight average molecular weight (Mw) was good in print stability, but was poor in performances and drying performance of printed matters as results. Comparative examples 5, 8, 9, 10 and 11, which had too high weight average molecular weight (Mw), or which used a resin having 3 or more of Mn/Mw, was good in performances and drying performance of printed matters, but was poor in print stability as results. Comparative examples 2, 3, 4 and 7, which used single binder resin having high weight average molecular weight (Mw) such as the vinyl polymer A-2 having a weight average molecular weight (Mw) of 39000 and the resin 3 (VYHD) having a weight average molecular weight (Mw) of 48000, had loss in print stability at low temperature and low humidity, and was poor in print stability as results.

The evaluation methods are described below.

<Print stability>

For the ink compositions obtained in Examples 1 to 14 and Comparative examples 1 to 12, printing was performed for 50 hours continuously using a solvent inkjet printer (Color Painter 64S Plus, manufactured by Seiko I Infotech, Inc.) under the environment of 25°C onto a polyvinyl chloride resin sheet with untreated surface, and the frequency of the occurrence of dot loss, flight deflection, or ink scattering was evaluated. At this time, the experiments were performed with managing the environmental temperature and humidity in printing to two environments, that is, middle temperature and middle humidity which means a temperature of 23°C and a humidity of 60 to 70%, and low temperature and low humidity which means a temperature of 15°C or less and a humidity of 40% or less. After the 50 hour continuous printing, a nozzle check pattern was printed, and the number of the places of dot loss, flight deflection or ink scattering was checked. The numbers are described in the

Table.

<Alcohol resistance>

For the ink compositions obtained in Examples 1 to 14 and Comparative examples 1 to 12, printing was performed using a solvent inkjet printer (Color Painter 64S Plus, manufactured by Seiko I Infotech, Inc.) onto a polyvinyl chloride resin sheet with untreated surface, and the printed surfaces were subjected to an evaluation of alcohol resistance using a rubbing tester (manufactured by Tester Sangyo Co., Ltd., Model AB301). As for the evaluation criteria, one drop of a solution, which was diluted with ethanol/water=70/30, was dropped onto a test cloth specimen (kanakin No. 3), and 50 reciprocated rubbings were performed under a load of 200 g. The evaluation was such that the case where the coated surface did not peel off at all was rated 5; the case where the test cloth specimen was colored but the printed surface had no noticeable change was rated 4; the case where the test cloth specimen was colored and the printed surface had somewhat color loss was rated 3; the case where the substrate was exposed was rated 2; and the case where the ink was peeled off and more than half of the substrate was exposed was rated 1.

<Gasoline resistance>

For the ink compositions obtained in Examples 1 to 14 and Comparative examples 1 to 12, printing was performed using a solvent inkjet printer (Color Painter 64S Plus, manufactured by Seiko I Infotech, Inc.) onto a polyvinyl chloride resin sheet with untreated surface, and the printed surfaces were subjected to an evaluation of gasoline resistance using a rubbing tester (manufactured by Tester Sangyo Co., Ltd., Model AB301). As for the evaluation criteria, one drop of gasoline was dropped onto a test cloth specimen (kanakin No. 3), and 10 reciprocated rubbings were performed with under a load of 200 g. The evaluation was such that the case where the coated surface did not peel off at all was rated 5; the case where the test cloth specimen was colored but the printed surface had no noticeable change was rated 4; the case where the test cloth specimen was colored and the printed surface had somewhat color loss was rated 3; the case where the substrate was exposed was rated 2; and the case where the ink was peeled off and more than half of the substrate was exposed was rated 1.

<Gloss>

For the ink compositions obtained in Examples 1 to 14 and Comparative examples 1 to 12, printing was performed using a solvent inkjet printer (Color Painter 64S Plus, manufactured by Seiko I Infotech, Inc.) onto a polyvinyl chloride resin sheet with untreated surface, and the gloss was evaluated with 60° gloss meter.

<Drying performance>

For the ink compositions obtained in Examples 1 to 14 and Comparative examples 1 to 12, beta printing was performed in 100, 200 or 300% printing rate as three color printing of Cyan, Magenta and Yellow using a solvent inkjet printer (Color Painter 64S Plus, manufactured by Seiko I Infotech, Inc.) onto a polyvinyl chloride resin sheet with untreated surface under the environment of 25°C, and the time taken by the ink to dry at 40°C was measured. Specifically, hand touch test was performed every 10 seconds, and the time to no adhesion to the hand was measured.

**Claims**

1. An ink composition comprising:

   at least a pigment;
   an organic solvent; and
   two or more kinds of binder resins having different weight average molecular weights (Mw), wherein the binder resins are selected from the group consisting of acrylic resins, styrene-acrylic resins and vinyl chloride resins wherein, among the two or more kinds of binder resins, a binder resin having lowest weight average molecular weight (Mw), which is marked as $\alpha$, meets the formula (2), a binder resin having higher weight average molecular weight (Mw) than that of the binder resin $\alpha$, which is marked as $\beta$, meets the formula (3), and the binder resins $\alpha$ and $\beta$ meet formulae (1) to (3) :

$$\text{Formula (1): } Mw\beta - Mw\alpha \geq 10,000,$$

$$\text{Formula (2): } 1,000 < Mw\alpha < 30,000,$$

   and

$$\text{Formula (3): } 20,000 < Mw\beta < 100,000,$$

   wherein $Mw\alpha$ represents the weight average molecular weight of the binder resin $\alpha$, and $Mw\beta$ represents the weight average molecular weight of the binder resin $\beta$; and
   wherein each of the two or more kinds of binder resins to be contained meets the formula (4) :

$$\text{Formula (4): } 1 < Mw/Mn < 3,$$

wherein Mw represents Mw$\alpha$ or Mw$\beta$, and Mn represents a number average molecular weight of each of the binder resins $\alpha$ and $\beta$,

said weight average molecular weights and number average molecular weights being polystyrene-conversion molecular weights measured with GPC using THF as the eluent.

2. The ink composition according to claim 1,
wherein the two or more kinds of binder resins to be contained are a vinyl chloride resin and/or an acrylic resin.

3. The ink composition according to claim 1 or claim 2,
wherein the ink composition comprises any one or more solvents represented by formulae (5) to (8) as the organic solvent:

Formula (5): $R_1CO(OR_2)_ZOR_3$,

Formula (6): $R_4CO(OR_5)_ZOCOR_6$,

Formula (7): $R_7(OR_8)ZOR_9$, and

Formula (8) : $R_{10}COOR_{11}$

(wherein $R_2$, $R_5$ and $R_8$ represent, independently from each other, an ethylene group or a propylene group, $R_1$, $R_3$, $R_4$ and $R_6$ represent, independently from each other, a $C_{1-4}$ alkyl group, $R_7$ and $R_9$ represent, independently from each other, a hydrogen atom or a $C_{1-4}$ alkyl group, $R_{10}$ represents a 2-hydroxyethyl group, $R_{11}$ represents a $C_{1-8}$ alkyl group and Z represents an integer of 1 to 3.).

4. The ink composition according to any one of claims 1 to 3,
wherein at least one or more kinds among the two or more kinds of binder resins to be contained are an acrylic resin, and are synthesized in an organic solvent having a boiling point of 60°C to 150°C, and then substituted in a stripping method to at least one (poly)alkylene glycol derivative having a boiling point of 150°C or more, and used.

5. The ink composition according to any one of claims 1 to 4,
wherein a nitrogen-containing, sulfur-containing, or lactone-based solvent is contained as a portion of the organic solvent.

6. The ink composition according to any one of claims 1 to 5,
wherein a dispersant is contained in the ink composition.

7. An inkjet ink according to any one of claims 1 to 6.

**Patentansprüche**

1. Tintenzusammensetzung, umfassend:

wenigstens ein Pigment;
ein organisches Lösungsmittel; und
zwei oder mehrere Arten von Bindemittel-Harzen, die unterschiedliche Gewichtsmittel des Molekulargewichts (Mw) aufweisen, worin die Bindemittel-Harze ausgewählt sind aus der Gruppe, die besteht aus Acryl-Harzen, Styrol-Acryl-Harzen und Vinylchlorid-Harzen,
worin unter den zwei oder mehreren Arten von Bindemittel-Harzen ein Bindemittel-Harz, welches das niedrigste Gewichtsmittel des Molekulargewichts (Mw) aufweist, welches mit $\alpha$ markiert ist, der Formel (2) entspricht, ein Bindemittel-Harz, welches ein höheres Gewichtsmittel des Molekulargewichts (Mw) als das des Bindemittel-Harzes $\alpha$ aufweist, welches mit $\beta$ markiert ist, der Formel (3) entspricht, und die Bindemittel-Harze $\alpha$ und $\beta$ den Formeln (1) bis (3) entsprechen:

$$\text{Formel (1): } Mw\beta - Mw\alpha \geq 10.000,$$

$$\text{Formel (2): } 1.000 < Mw\alpha < 30.000,$$

und

$$\text{Formel (3): } 20.000 < Mw\beta < 100.000,$$

worin $Mw\alpha$ das Gewichtsmittel des Molekulargewichts des Bindemittel-Harzes $\alpha$ wiedergibt, und $Mw\beta$ das Gewichtsmittel des Molekulargewichts des Bindemittel-Harzes $\beta$ wiedergibt; und

worin jedes der zwei oder mehrere Arten von Bindemittel-Harzen, die enthalten sein sollen, der Formel (4) entspricht:

$$\text{Formel (4): } 1 < Mw/Mn < 3,$$

worin Mw $Mw\alpha$ oder $Mw\beta$ wiedergibt, und Mn ein Zahlenmittel des Molekulargewichts jedes der Bindemittel-Harze $\alpha$ und $\beta$ wiedergibt,

wobei die Gewichtsmittel des Molekulargewichts und die Zahlenmittel des Molekulargewichts Molekulargewichte der Polystyrol-Umrechnung sind, gemessen mit GPC unter Verwendung von THF als Elutionsmittel.

2. Tintenzusammensetzung nach Anspruch 1, worin die zwei oder mehrere Arten der Bindemittel-Harze, die enthalten sein sollen, ein Vinylchlorid-Harz und/oder ein Acryl-Harz sind.

3. Tintenzusammensetzung nach Anspruch 1 oder Anspruch 2, worin die Tintenzusammensetzung irgendein oder mehrere Lösungsmittel als das organische Lösungmittel umfaßt, das/die durch die Formeln (5) bis (8) wiedergegeben wird/werden:

Formel (5): $R_1CO(OR_2)_ZOR_3$,

Formel (6): $R_4CO(OR_5)_ZOCOR_6$,

Formel (7): $R_7(OR_8)_ZOR_9$, und

Formel (8) : $R_{10}COOR_{11}$,

(worin $R_2$, $R_5$ und $R_8$ unabhängig voneinander eine Ethylen-Gruppe oder eine Propylen-Gruppe wiedergeben, $R_1$, $R_3$, $R_4$ und $R_6$ unabhängig voneinander eine $C_{1-4}$-Alkylgruppe wiedergeben, $R_7$ und $R_9$ unabhängig voneinander ein Wasserstoffatom oder eine $C_{1-4}$-Alkylgruppe wiedergeben, $R_{10}$ eine 2-Hydroxyethylgruppe wiedergibt, $R_{11}$ eine $C_{1-8}$-Alkyl-Gruppe wiedergibt und Z für eine ganze Zahl von 1 bis 3 steht).

4. Tintenzusammensetzung nach irgendeinem der Ansprüche 1 bis 3, worin wenigstens eine oder mehrere Art (en) unter den zwei oder mehreren Arten von Bindemittel-Harzen, die enthalten sein sollen, ein Acryl-Harz ist/sind und in einem organischen Lösungsmittel, das einen Siedepunkt von 60 °C bis 150 °C aufweist, synthetisiert wird/werden, und danach in einem Stripping-Verfahren zu wenigstens einem (Poly)alkylenglykol-Derivat, das einen Siedepunkt von 150 °C oder mehr aufweist, substituiert wird/werden und verwendet wird/werden.

5. Tintenzusammensetzung nach irgendeinem der Ansprüche 1 bis 4, worin ein Stickstoff-haltiges, Schwefel-haltiges oder Lacton-basiertes Lösungsmittel als ein Teil des organischen Lösungsmittels enthalten ist.

6. Tintenzusammensetzung nach irgendeinem der Ansprüche 1 bis 5, worin ein Dispergiermittel in der Tintenzusammensetzung enthalten ist.

7. Tintenstrahl-Tinte nach einem der Ansprüche 1 bis 6.

**Revendications**

1. Composition d'encre comprenant :

   au moins un pigment ;
   un solvant organique ; et
   deux types ou plus de résines liantes ayant des poids moléculaires moyens en poids (Mw) différents, dans laquelle les résines liantes sont sélectionnées dans le groupe constitué par les résines acryliques, les résines styrène-acrylique et les résines de chlorure de vinyle
   dans laquelle, parmi les deux types ou plus de résines liantes, une résine liante ayant le poids moléculaire moyen en poids (Mw) le plus bas, qui est marquée α, répond à la formule (2), une résine liante ayant un poids moléculaire moyen en poids (Mw) supérieur à celui de la résine liante α, qui est marquée β, répond à la formule (3), et les résines liantes α et β répondent aux formules (1) à (3) :

   $$\text{Formule (1) : } Mw\beta - Mw\alpha \geq 10\ 000,$$

   $$\text{Formule (2) : } 1\ 000 < Mw\alpha < 30\ 000,$$

   et

   $$\text{Formule (3) : } 20\ 000 < Mw\beta < 100\ 000,$$

   dans laquelle Mwα représente le poids moléculaire moyen en poids de la résine liante α, et Mwβ représente le poids moléculaire moyen en poids de la résine liante β ; et
   dans laquelle chacun des deux types ou plus de résines liantes à contenir répond à la formule (4) :

   $$\text{Formule (4) : } 1 < Mw/Mn < 3,$$

   dans laquelle Mw représente Mwα ou Mwβ, et Mn représente un poids moléculaire moyen en nombre de chacune des résines liantes α et β,
   lesdits poids moléculaires moyens en poids et poids moléculaires moyens en nombre étant des poids moléculaires de conversion du polystyrène mesurés par CPG en utilisant du THF en tant qu'éluent.

2. Composition d'encre selon la revendication 1,
   dans laquelle les deux types ou plus de résines liantes à contenir sont une résine de chlorure de vinyle et/ou une résine acrylique.

3. Composition d'encre selon la revendication 1 ou la revendication 2,
   dans laquelle la composition d'encre comprend l'un quelconque ou plusieurs solvants représentés par les formules (5) à (8) en tant que solvant organique :

   | Formule (5) : | $R_1CO(OR_2)_ZOR_3,$ |
   |---|---|
   | Formule (6) : | $R_4CO(OR_5)_ZOCOR_6,$ |
   | Formule (7) : | $R_7(OR_8)_ZOR_9,$ et |
   | Formule (8) : | $R_{10}COOR_{11}$ |

   (dans laquelle $R_2$, $R_5$ et $R_8$ représentent, indépendamment les uns des autres, un groupe éthylène ou un groupe propylène, $R_1$, $R_3$, $R_4$ et $R_6$ représentent, indépendamment les uns des autres, un groupe alkyle en $C_{1-4}$, $R_7$ et $R_9$ représentent, indépendamment l'un de l'autre, un atome d'hydrogène ou un groupe alkyle en $C_{1-4}$, $R_{10}$ représente un groupe 2-hydroxyéthyle, $R_{11}$ représente un groupe alkyle en $C_{1-8}$ et Z représente un nombre entier de 1 à 3).

**4.** Composition d'encre selon l'une quelconque des revendications 1 à 3,
dans laquelle au moins un ou plusieurs types parmi les deux types ou plus de résines liantes à contenir sont une résine acrylique, et sont synthétisés dans un solvant organique ayant un point d'ébullition de 60°C à 150°C, et ensuite substitués dans un procédé de dépouillement à au moins un dérivé de (poly)alkylène glycol ayant un point d'ébullition de 150°C ou plus, et utilisés.

**5.** Composition d'encre selon l'une quelconque des revendications 1 à 4,
dans laquelle un solvant contenant de l'azote, contenant du soufre ou à base de lactone est contenu en tant que partie du solvant organique.

**6.** Composition d'encre selon l'une quelconque des revendications 1 à 5,
dans laquelle un dispersant est contenu dans la composition d'encre.

**7.** Encre pour impression à jet d'encre selon l'une quelconque des revendications 1 à 6.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007284642 A
- JP 2006056990 A
- JP 2007169492 A

- WO 2006052973 A
- JP 2008228848 A
- JP 2008301093 A